# EUROPEAN PATENT APPLICATION

(11) **EP 4 454 524 A1**
(43) Date of publication of application: **30.10.2024**
(21) Application number: 22911540.7
(22) Date of filing: 07.10.2022
(51) Int. Cl.: A47J 37/06, A61L 9/01

(54) **AIR CIRCULATION-TYPE ELECTRIC ROASTER**

(30) Priority: 26.12.2021 KR 20210187887; 15.06.2022 KR 20220072905
(71) Applicant: DNW, LTD, Anyang-si, Gyeonggi-do 14084 (KR)
(72) Inventor: KHANG, Hyunho, Jincheon-gun, Chungcheongbuk-do 27839 (KR)
(74) Representative: Tergau & Walkenhorst Intellectual Property GmbH
(86) International application number: PCT/KR2022/015069
(87) International publication number: WO 2023/120901

(57) **Abstract**

An air-circulating electric roaster equipped with a cross-flow fan, includes an air intake portion for sucking in air from above a cooking plate and an air discharge portion for discharging air to above the cooking plate respectively provided on a first side wall and a second side wall facing each other in a first direction, wherein the first side wall and the second side wall are combined with a body to respectively form parts of an air intake path and an air discharge path and a holder for detachably fixing an air purification member that makes contact with the air sucked through the air intake portion to an inner wall of the body where the air sucked through the air intake portion of the air intake path hits and changes its direction. The cross-flow fan is configured to suck air through the air intake path in a direction perpendicular to a rotation axis and to discharge the air in a direction perpendicular to the rotation axis.

## Description

### TECHNICAL FIELD

The present invention relates to an air-circulating electric roaster.

### BACKGROUND ART

An electric roaster is an appliance that includes a cooking plate and a heater in its body and cooks food on the cooking plate by applying power to heat the heater.

In an air-circulating electric roaster, an elongated fan is placed on one side of the lower part of the main body, and the cooking plate is placed at the upper part. During cooking, the fan is activated to create a constant air flow inside the air-circulating electric roaster (See, for example, Korean Patent Application Laid-Open Publication No. 10-2007-0008383), so smoke is not discharged to the outside, and oil is received into the internal oil pan through a hole in the cooking plate.

In this type of air-circulating electric roaster, an air intake portion and an air discharge portion are formed on the side of the air circulation plate, and as the fan operates, air is sucked in from the cooking unit and discharged to the air discharge portion through the lower part of the air circulation plate.

However, in the air-circulating electric roaster having the above structure, although the overall effect of removing oil components from the smoke is satisfactory, there is a problem in that some odor is still released to the outside.

In addition, the oil contained in the air sucked during cooking attaches to the air flow path and the fan inside the air-circulating electric roaster before passing through the oil pan, causing internal contamination, resulting in frequent cleaning and difficult removal of oil stains, which causes inconvenience to users.

Korean Patent No. 10-0378209 proposes a structure that allows the air discharged from the fan to pass through a deodorant and a negative ion generator to circulate purified air. However, this is installed on the outlet side of the fan where the air is discharged, which fails to reduce contamination of the intake passage and the fan where most oil and odor are contained.

The structure that uses a filter on the air discharge portion side can generate strong air pressure so that the circulated air can overcome the resistance of the filter and pass through the axial flow fan. However, when using a cross-flow fan to achieve the air curtain effect at the top of the cooking plate, the air pressure is relatively low, making it difficult to install a filter on the air discharge portion side of the fan.

A fan that circulates air can be classified into a centrifugal fan that intakes air in the direction of the rotation axis and discharges it in a direction perpendicular to the rotation axis according to the rotation axis that rotates the fan and the air suction and discharge direction, a cross-flow fan that takes in air in a direction perpendicular to the rotation axis and discharges air in a vertical direction, an axial flow fan that sucks air in the direction of the rotation axis and discharges it in the direction of the rotation axis. The cross-flow fan is advantageous for forming an air curtain at the top of the cooking plate by sucking in and discharging air over a wide width.

However, because the air pressure is relatively weak compared to centrifugal fans or axial fans, there is a problem in that it is difficult to ensure smooth circulation of air so that an air curtain is formed at the top of the cooking plate when a filter such as a deodorant is installed in the air circulation path.

In addition, the method of forcing the circulating air to pass through a filter requires high-speed rotation of the motor, which increases noise and vibration during use and increases power consumption.

### DISCLOSURE OF INVENTION

### PROBLEM TO BE SOLVED BY THE INVENTION

It is an object of the present invention to provide an air-circulating electric roaster using a cross-flow fan, which can minimize contamination of air intake path and the cross-flow fan without interfering with smooth air circulation.

It is another object of the present invention to provide an air purification member that can effectively reduce oil and odor contained in the circulating air in an air-circulating electric roaster using a cross-flow fan.

The technical problems to be solved by the present disclosure are not limited to the above-mentioned, and other technical problems not mentioned herein can be clearly understood by one of ordinary skill in the pertinent art from the following descriptions.

### MEANS FOR SOLVING PROBLEM

According to at least one embodiment of the present invention, an air-circulating electric roaster equipped with a cross-flow fan, includes an air intake portion for sucking in air from above a cooking plate and an air discharge portion for discharging air to above the cooking plate respectively provided on a first side wall and a second side wall facing each other in a first direction, wherein the first side wall and the second side wall are combined with a body to respectively form parts of an air intake path and an air discharge path and a holder for detachably fixing an air purification member that makes contact with the air sucked through the air intake portion to an inner wall of the body where the air sucked through the air intake portion in the air intake path hits and changes its direction. The cross-flow fan is configured to suck air through the air intake path in a direction perpendicular to a rotation axis and to discharge the air in a direction perpendicular to the rotation axis.

Furthermore, according to at least one embodiment of the present invention,

Moreover, according to at least one embodiment of the present invention, the first side wall and the second side wall are formed integrally and configured to be detachably coupled to the body.

Furthermore, according to at least one embodiment of the present invention, the air purification member fixed by the holder has a corrugated shape or a wrinkled shape to increase a surface area in contact with the air sucked through the air intake portion.

Moreover, according to at least one embodiment of the present invention, the air purification member fixed by the holder includes a porous material.

Furthermore, according to at least one embodiment of the present invention, an air-circulating electric roaster includes a body, a heater for generating heat, a fan disposed inside the body along a first direction of the body, a cooking plate disposed on an upper part of the heater and heated by the heat from the heater, an air intake portion having at least one or more through holes for sucking in air from above the cooking plate, an air discharge portion having at least one or more through holes for discharging air that passed through inside the body towards above the cooking plate, and a fixing member disposed between the air intake portion and an inner side of the body, and is configured to fix an air purification member for attenuating odor of the air sucked through the air intake portion to an inner wall of the body so that a widest surface of the air purification member is parallel to an air flow path formed inside the body and faces the air flow path.

Moreover, according to at least one embodiment of the present invention, the fixing member is provided so that the air flow path is formed between a surface of the air intake portion and a surface of the air purification member.

Furthermore, according to at least one embodiment of the present invention, the fixing member is provided so that the surface of the air purification member is disposed at a position between 1/5 and 2/3 of a distance between the surface of the air intake portion and a surface of the inner wall of the body from the surface of the air intake portion.

Moreover, according to at least one embodiment of the present invention, a space is formed between a surface of the air intake portion and a surface of the inner wall of the body, where the air purification member having a length equal to or larger than a length of the air intake portion in a longitudinal direction is fixed by the fixing unit.

Furthermore, according to at least one embodiment of the present invention, a space is formed between a surface of the air intake portion and a surface of the inner wall of the body, where the air purification member having a length in a vertical direction of the air-circulating electric roaster equal to or larger than a length of the air intake portion in a short-side direction is fixed by the fixing member.

Moreover, according to at least one embodiment of the present invention, the air purification member is formed of a material with a porous structure, and has a plate shape with a predetermined width (w), height (h), and thickness (t), the width (w) is equal to or larger than a length of the air intake portion in the first direction, the height (h) is equal to or larger than a length in a vertical direction perpendicular to the first direction of the air intake portion, the thickness (t) is within 4/5 of a width in a transversal direction perpendicular to the first direction of a space with the fan is disposed, and the air purification member is disposed at a position separated by a distance (d) from the air intake portion.

Furthermore, according to at least one embodiment of the present invention, the width (w) is equal to or larger than a length of the air intake portion in the first direction, the height (h) is equal to or larger than a length in a vertical direction perpendicular to the first direction of the air intake portion, and the thickness (t) is within 4/5 of a width in a transversal direction perpendicular to the first direction of a space with the fan is disposed.

Moreover, according to at least one embodiment of the present invention, an air-circulating electric roaster system includes the air-circulating electric roaster according to at least one embodiment of the present invention and an air purification member fixed by the fixing member of the air-circulating electric roaster.

In this specification, each embodiment is described independently, but each embodiment can be combined with each other, and the combined embodiments are also included in the scope of the present invention.

The above and other objects, features, advantages and technical and industrial significance of this invention will be better understood by reading the following detailed description of presently preferred embodiments of the invention, when considered in connection with the accompanying drawings.

### EFFECT OF THE INVENTION

According to at least one embodiment of the present invention, it is possible to provide an air-circulating electric roaster using a cross-flow fan, which can minimize contamination of air intake path and the cross-flow fan without interfering with smooth air circulation.

Furthermore, according to at least one embodiment of the present invention, it is possible to provide an air purification member that can effectively reduce oil and odor contained in the circulating air in an air-circulating electric roaster using a cross-flow fan.

The challenges to be addressed by the present invention are not limited to those mentioned above, and other unmentioned problems can be clearly understood by those skilled in the art from the following description.

### BRIEF DESCRIPTION OF DRAWINGS

Fig. 1 is a side cross-sectional view of an air-circulating electric roaster according to at least one embodiment of the present invention.
Fig. 2 is a perspective view of the air-circulating electric roaster shown in Fig. 1.
Fig. 3 is a detailed side cross-sectional view of a fan side space of an air-circulating electric roaster according to at least one embodiment of the present invention.
Fig. 4 is a perspective view of an air purification member (odor attenuating member) according to at least one embodiment of the present invention.
Fig. 5 is a perspective view of an air circulation plate of an air-circulating electric roaster according to at least one embodiment of the present invention.
Fig. 6 is an internal image of an air-circulating electric roaster equipped with an air purification member according to at least one embodiment of the present invention.
Fig. 7 is a graph showing a result of an experiment using sponges of different densities for the air purification member according to at least one embodiment of the present invention.
Fig. 8 is an image showing a state after use of the air purification member according to at least one embodiment of the present invention.

### BEST MODE(S) FOR CARRYING OUT THE INVENTION

Exemplary embodiments of the present invention are described in detail below with reference to the accompanying drawings.

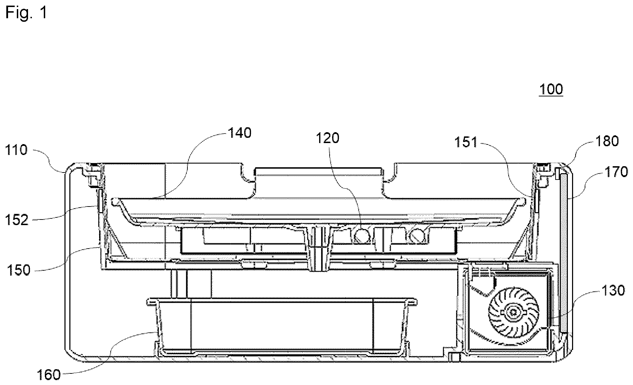

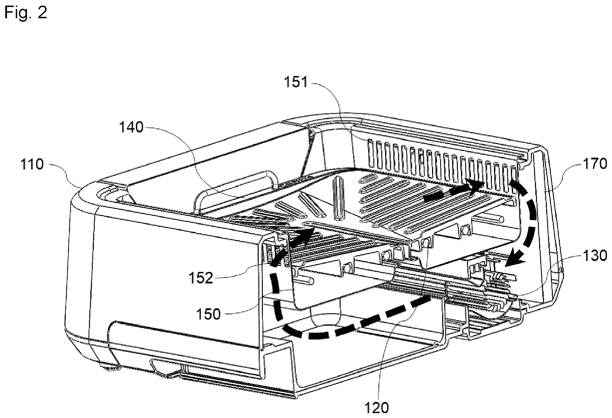

Fig. 1 is a side cross-sectional view of an air-circulating electric roaster 100 according to at least one embodiment of the present invention. Fig. 2 is a perspective view of the air-circulating electric roaster 100 shown in Fig. 1.

As shown in Fig. 1, the air-circulating electric roaster 100 according to at least one embodiment of the present invention includes a body 110, a heater 120 for generating heat, and a power supply unit (not shown) for supplying power to the heater 120, a fan 130 disposed inside the body 110 along the longitudinal direction of the body 110, a cooking plate 140 installed on the upper part of the heater 120 and heated by the heat from the heater 120, an air circulation plate 150, an oil pan 160, and an air purification member 170.

In at least one embodiment of the present invention, the air purification member 170 is a member that has a function of minimizing contamination of the air intake path and a cross-flow fan without interfering with smooth air circulation in the air-circulating electric roaster 100 using the cross-flow fan, and at the same time, it has a function of effectively attenuating oil and odor contained in the air circulated in the air-circulating electric roaster 100, which is therefore called an odor attenuation member.

The body 110 is seated on a table or a floor, and includes various parts therein to form the overall appearance of the air-circulating electric roaster 100 according to at least one embodiment of the present invention. The fan 130 is located inside the lower part of the body 110, and the oil pan 160, the air circulation plate 150, the heater 120, and the cooking plate 140 are arranged in order from bottom to top in the body 110.

In at least one embodiment of the present invention, the fan 130 mounted inside the body 110 is an elongated fan with a built-in motor, and the smoke (oil) generated during cooking is circulated through the operation of the fan 130, by which hot air containing oil component and odors is sucked in so that only air from which oil and odors have been removed is released to the outside of the body 110.

Although, in the example shown in Fig. 1, the cooking plate 140 is shown as having one through hole in the center, but this only shows one embodiment, it is specified that the present invention is not limited by the specific shapes of the body 110, the heater 120, the fan 130 , the cooking plate 140, the air circulation plate 150, and the oil pan 160.

In at least one embodiment of the present invention, an air intake portion 151 and an air discharge portion 152 are respectively formed on sides of the air circulation plate 150, and when the fan 130 is operated during cooking, air (smoke) containing oil and odor is drawn through the air intake portion 151, passes over the oil pan 160 along the lower part of the air circulation plate 150, and is discharged to the upper part of the cooking plate 140 through the air discharge portion 152 (See dotted arrow in Fig. 2).

In order to minimize contamination of the air intake path and cross-flow fan without interfering with smooth air circulation and to effectively attenuate oil and odor contained in the circulating air of the air-circulating electric roaster using the cross-flow fan, as shown in Fig. 1, the air-circulating electric roaster 100 according to at least one embodiment of the present invention includes the air purification member 170 mounted in the space on the side where the fan 130 is located.

The air purification member 170 is a plate-shaped porous material member with a predetermined thickness, width, and height, and is installed by a fixing member 180 in the space on the side where the fan 130 is located inside the body 110.

In at least one embodiment of the present invention, the fixing member 180 is a member for detachably fixing the air purification member 170, which makes contact with the air sucked in through the air intake portion 151, on the inner wall of the body 110, where the air sucked in through the air intake portion 151 of the air intake path hits and changes its direction. The fixing member 180 includes a clamp type, a clip type, a pin type, and a guide type through a groove, and can be referred to as a holder.

In the example shown in Fig. 1, the fixing member 180 located inside the body 110 is an example for installing the air purification member 170, and the fixing member 180 located inside the body 110 can install the air purification member 170 in various structures in the air-circulating electric roaster 100 according to at least one embodiment of the present invention. For example, a structure in which the air purification member 170 is inserted by simply forming a groove of a size into which the air purification member 170 fits on the inner wall of the body 110 is possible, and a clip, a protrusion, or a magnet can be used to fix the air purification member 170.

The fixing member 180 is located in the space between the surface of the air circulation plate 150 where the air intake portion 151 is formed and the inner wall surface of the body 110. The fixing member 180 can be formed to make a distance (d) between a surface of the air purification member 170 fixed by the fixing member 180 on the air intake portion 151 side and the air circulation plate 150 on which the air intake portion 151 is formed be between 1/5 and 2/3 of a distance between the surface of the air circulation plate 150 on which the air intake portion 151 is formed and the inner wall surface of the body 110. By setting the distance (d) in this way, a sufficient thickness of the air purification member 170 can be secured while securing the air flow path.

In at least one embodiment of the present invention, the fixing member 180 can be configured to change its position between the surface of the air circulation plate 150 where the air intake portion 151 is formed and the inner wall surface of the body 110 so that the distance (d) can be changed. For example, the fixing member 180 is configured by forming a plurality of holes in the upper part of the body 110 so that it can be fixed with screws or the like at different positions as needed, so that the user can change the fixing position.

The fixing member 180, for example, can be configured to allow the distance (d) from the surface of the air circulation plate 150 to be adjusted within the range of 1/5 to 2/3 of the distance between the surface of the air circulation plate 150 on which the air intake portion 151 is formed and the inner wall surface of the body 110. As such, according to at least one embodiment of the present invention, the fixing member 180 can be configured in a position-variable structure so that the user can use the air purification member 170 of different thickness as needed.

That is, the fixing member 180 is disposed between the air intake portion 151 and the inner side of the body 110, and is configured to fix the plate-shaped air purification member 170 for attenuating the odor of the air sucked through the air intake portion 151 to the inner wall of the body 110 so that the widest surface of the air purification member 170 is parallel to the air flow path formed inside the body 110 and faces the air flow path.

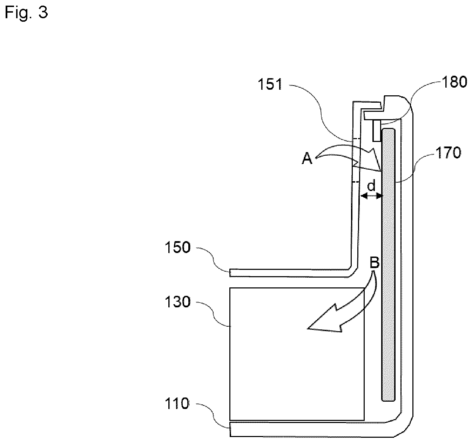

Fig. 3 is a detailed side cross-sectional view of the fan 130 side space of the air-circulating electric roaster 100 according to at least one embodiment of the present invention.

In the case of a conventional air-circulating electric roaster without the air purification member 170, hot smoke generated during cooking is sucked in in the direction of arrow A through the air intake portion 151 by operation of the fan 130, proceeds in the direction of the arrow (B), and is discharged through the air discharge portion 152.

At this time, a significant portion of the smoke sucked through the air intake portion 151 flows along the inner wall of the body 110, and oil adheres to the wall due to the temperature drop of the smoke hitting the wall, and the oil flows down along the wall.

In addition, although most of the oil has been removed from the air that passes through the oil pan 160 and is discharged through the air discharge portion 152, residual oil and odor are still released to the outside, which may cause discomfort to the user.

On the other hand, in the case of the air-circulating electric roaster 100 equipped with the air purification member 170 according to at least one embodiment of the present invention, a significant portion of the smoke sucked in through the air intake portion 151 as shown in Fig. 3 first hits the air purification member 170, and some passes through the air purification member 170. However, since the oil and odor components have already been filtered by the air purification member 170, almost no oil adheres to the wall.

In addition, since a significant portion of the odor components (and oil components) are primarily absorbed by the air purification member 170, most of the oil and Odor components are removed from the air discharged through the air discharge portion 152, and residual odors are not released to the outside unlike conventional air-circulating electric roasters.

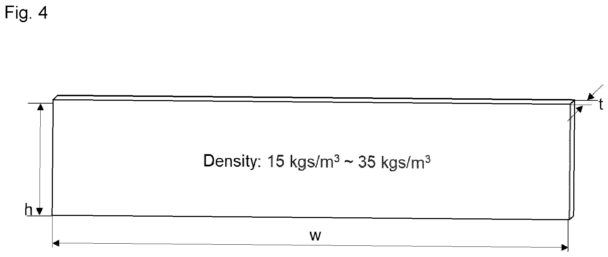

Fig. 4 is a perspective view of the air purification member 170 according to at least one embodiment of the present invention.

As shown in Fig. 4, the air purification member 170 according to at least one embodiment of the present invention is formed of a porous material and has a plate shape with a predetermined width (w), height (h), and thickness (t).

Since the air purification member 170 is made of a porous material, even if the space on the side where the fan 130 is located is narrow, a part of the smoke sucked into the air intake portion 151 passes through the air purification member 170 and is discharged through the air discharge portion 152. Therefore, it does not significantly affect the overall air circulation function of the air-circulating electric roaster 100.

However, depending on the density of the porous material, not only the odor reduction effect but also the overall air circulation function of the air-circulating electric roaster 100 may be reduced, which will be explained below with the actual test results.

As an example of the porous material, sponges are mostly made of polyurethane and can be roughly classified by density in kgs/m³ as follows.
i) Regular Sponge: about 15 kgs/m³ ~ 20 kgs/m³
ii) Sea Sponge: about 20 kgs/m³
iii) Soft Sponge: about 21 kgs/m³
iv) Highly Elastic Sponge: about 25 kgs/m³ ~ 35 kgs/m³
v) Marble Sponge: about 40 kgs/m³
vi) Compressed Marble Sponge: about 70 kgs/m³

The actual experiment involved the air purification member 170 manufactured with a size of 322 mm × 92 mm × 10 mm (w × h × t) using sponges with densities of 15 kgs/m³, 28 kgs/m³, 30 kgs/m³, 35 kgs/m³, and 40 kgs/m³ and mounted on an actual air-circulating electric roaster. The process of roasting 600g of meat (beef and pork) for about 30 minutes was set to one-time use to observe odor attenuation and wall oil adherence.

In at least one embodiment of the present invention, the size of the air purification member 170 is, for example, the width corresponding to the entire length of the air intake portion 151, the height corresponding to the height of the inner wall, and the thickness depending on the size of the side space where the fan 130 is located, being set not to exceed 1/3, 1/2, 2/3, or 4/5 of the width of this space.

In at least one embodiment of the present invention, the size of the air purification member 170 is, for example, the width corresponds to the entire length of the air intake portion 151, the height corresponds to the total height of the air intake portion 151, and the thickness, depending on the size of the side space in which the fan 130 is located, set not to exceed 1/3, 1/2, 2/3, or 4/5 of the width of this space.

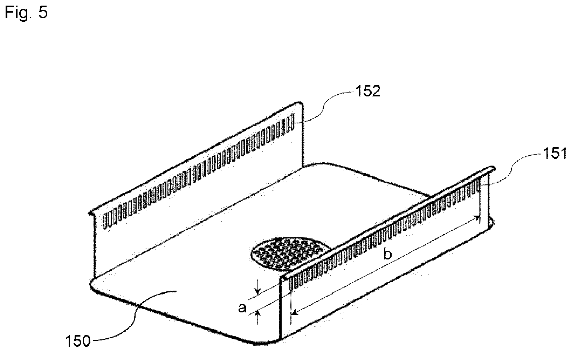

Fig. 5 is a perspective view of the air circulation plate 150 of the air-circulating electric roaster 100 according to at least one embodiment of the present invention.

As shown in Fig. 5, the air intake portion 151 has a plurality of through holes formed along the longitudinal direction of the body 110 (i.e., along the longitudinal direction of the fan 130), where the total length of the air intake portion 151 is the length corresponding to the length from the beginning to the end of the plurality of through holes ('b' in Fig. 5), which roughly corresponds to the length of the long side of the fan 130.

In addition, the total height of the air intake portion 151 corresponds to the length of the through hole ('a' in Fig. 5) formed in the vertical direction perpendicular to the longitudinal direction. That is, the overall shape of the air intake portion 151 formed of the plurality of through holes is a bar shape elongated in the longitudinal direction, and the total length of the air intake portion 151 corresponds to the length of this bar shape, and the total height of the air intake portion 151 corresponds to the width of this bar shape.

In addition, as shown in Fig. 3, it is desirable to leave a predetermined distance (d) between the air intake portion 151 and the air purification member 170. This means that when the air purification member 170 is mounted in close contact with the air intake portion 151, it acts as a flow resistance for the smoke sucked through the air intake portion 151, thereby affecting the overall air circulation of the air-circulating electric roaster 100.

As a result of conducting an experiment with the air purification member 170 in close contact with the actual air intake unit 151, smoke was emitted to the outside from the beginning, so it is necessary to secure the distance (d) between the air intake portion 151 and the air purification member 170.

In the experiment, the distance (d) was set to approximately 8 mm to 9 mm, but the distance (d) can be set differently depending on the density and thickness (t) of the porous material used in the air purification member 170.

In the device used in the experiment, the width of the side space where the fan 130 is located (distance in the transversal direction perpendicular to the longitudinal direction) is 19 mm at the position of the air intake portion 151, and the thickness (t) of the air purification member 170 is 10 mm, which corresponds to approximately 1/2 of the side space where the fan 130 is located.

The thickness (t) of the air purification member 170 can be set from about 1/3 to about 4/5 of the width of the side space where the fan 130 is located, depending on the density of the porous material used. That is, in the case of a low-density porous material, the thickness (t) of the air purification member 170 can be set to about 4/5 of the width of the side space where the fan 130 is located, and in the case of a high-density porous material, the thickness (t) of the air purification member 170 can be set to about 1/3 of the width of the side space where the fan 130 is located.

Fig. 5 shows an example in which the air intake portion 151 and the air discharge portion 152 are formed on the upper part of the walls on both sides of the air circulation plate 150. However, the walls on both sides of the cooking plate 140 can be raised to increase the air intake portion 151 and the air discharge portion 152, forming the air intake portion 151 and the air discharge portion 152 on the upper part of the walls on both sides, to form the space in a portion corresponding to the air intake portion 151 and the air discharge portion 152 on both walls of the air circulation plate 150.

In addition, the upper part of the body 110 can be extended toward the air circulation plate 150 to form the air intake portion 151 and the air discharge portion 152 in the extended portion, and the space can be formed in a portion corresponding to the air intake portion 151 and the air discharge portion 152 of the air circulation plate 150.

In another embodiment, a member in which the air intake portion 151 and the air discharge portion 152 are integrated is coupled to the upper part of the body 110, and the space can be formed in a portion corresponding to the air intake portions 151 and the air discharge portion 152 of the air circulation plate 150.

That is, an air-circulating electric roaster according to at least one embodiment of the present invention equipped with a cross-flow fan includes an air intake portion for sucking in air from above a cooking plate and an air discharge portion for discharging air to above the cooking plate respectively provided on a first side wall and a second side wall facing each other in a first direction, where the first side wall and the second side wall are combined with a body to respectively form parts of an air intake path and an air discharge path and a holder for detachably fixing an air purification member that makes contact with the air sucked through the air intake portion to an inner wall of the body where the air sucked through the air intake portion of the air intake path hits and changes its direction. The cross-flow fan is configured to suck air through the air intake path in a direction perpendicular to a rotation axis and to discharge the air in a direction perpendicular to the rotation axis.

In at least one embodiment of the present invention, the first side wall and the second side wall are formed integrally and configured to be detachably coupled to the body.

In at least one embodiment of the present invention, the air purification member fixed by the holder has a corrugated shape or a wrinkled shape to increase a surface area in contact with the air sucked through the air intake portion.

In at least one embodiment of the present invention, the air purification member fixed by the holder includes a porous material.

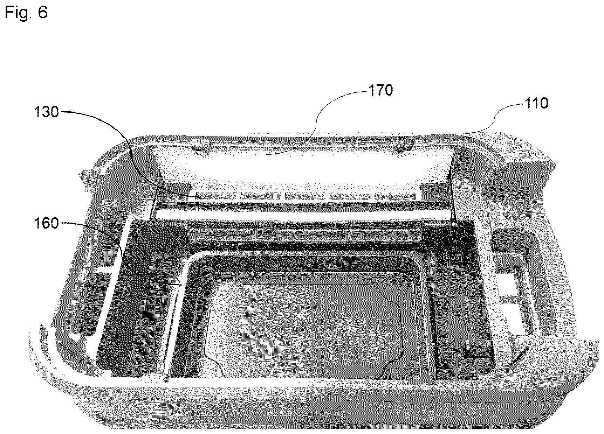

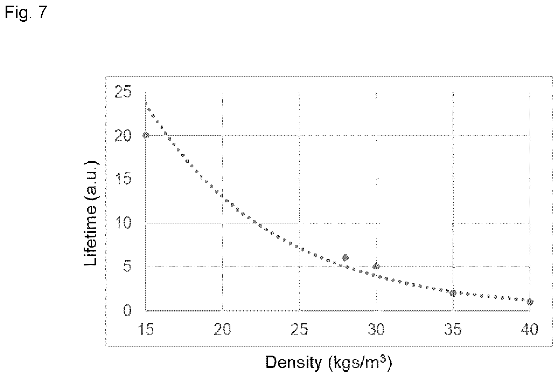

Fig. 6 is an internal image of the air-circulating electric roaster 100 equipped with the air purification member 170 according to at least one embodiment of the present invention. Fig. 7 is a graph showing a result of an experiment using sponges of different densities for the air purification member 170 according to at least one embodiment of the present invention.

As shown in the graph of Fig. 7, when a sponge with a density of 15 kgs/m³ was used in the air purification member 170, it was possible to use it about 15 to 20 times, when a sponge with a density of 28 kgs/m³ was used, an odor occurred after about six times of uses, when a sponge with a density of 30 kgs/m³ was used, smoke began to appear after about six times of uses, when a sponge with a density of 35 kgs/m³ was used, smoke began to appear after about three times of uses, and when a sponge with a density of 40 kgs/m³ was used, smoke began to appear from the first time of use.

Here, the judgment that there is an odor is a judgment from the perspective of the user located on the side of the air intake portion 151 during cooking, which means that air from which oil (odor) components have been incompletely removed passes through the air discharge portion 152 and is emitted toward the user on the side of the air intake portion 151.

The graph shown in Fig. 7 quantifies the number of usable times according to density by lifespan based on the above experimental results, which shows that porous materials with densities of approximately 15 kgs/m³ ~ 35 kgs/m³ can be used for the air purification member 170 according to at least one embodiment of the present invention.

More specifically, when a sponge with a density of 15 kgs/m³ was used in the air purification member 170 as the first sample, the odor reduction effect was maintained even after repeated use about 10 times, and it was confirmed that the odor reduction effect had increased by approximately 60% to 80% compared to a conventional air-circulating electric roaster without the air purification member 170.

In the case of the first sample, a sponge with a density of 15 kgs/m³, there was no significant problem in sucking smoke even if a part of the air intake portion 151 was blocked with the air purification member 170, so the distance (d) between the air intake portion 151 and the purification members 170 can be set closer. Therefore, it can be said to be more advantageous in terms of freedom of layout.

When a sponge with a density of 28 kgs/m³ was used as the second sample in the air purification member 170, an odor began to be emitted after six times of uses, and it was expected that smoke would be emitted if used further.

When a sponge with a density of 30 kgs/m³ was used in the air purification member 170 as the third sample, smoke began to appear after six times of uses, so it was determined that it could no longer be used.

When a sponge with a density of 35 kgs/m³ was used in the air purification member 170 as the fourth sample, smoke began to appear after three times of uses, so it was determined that it could no longer be used, as with the third sample.

When a sponge with a density of 40 kgs/m³ was used in the air purification member 170 as the fifth sample, smoke began to appear after one time of use, so it was judged to be unsuitable for use as the air purification member 170.

However, even if it is a porous material with a low density (e.g., the first sample with a density of 15 kgs/m³), if the air purification member 170 is brought into close contact with the air intake portion 151, smoke is generated even when used only once. Therefore, it can be said that it is important to leave the distance (d) between the air intake portion 151 and the air purification member 170, and it is necessary to set the distance (d) longer than the minimum distance that does not affect the overall air circulation function of the air-circulating electric roaster 100 depending on the density (and thickness) of the porous material used.

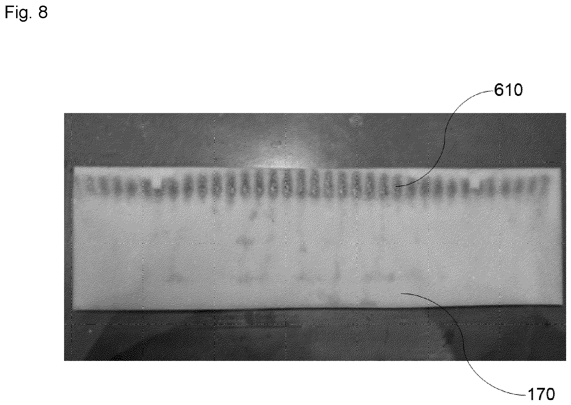

Fig. 8 is an image showing a state after use of the air purification member 170 according to at least one embodiment of the present invention.

As shown in Fig. 8, when used repeatedly several times, it can be seen that oil traces 610 are formed in the positions corresponding to the plurality of through holes of the air intake portion 151, and as use is repeated, the adsorbed oil flows down along the air purification member 170.

Referring to the result shown in Fig. 8, it can be seen that the height (h) of the air purification member 170 can be set to at least the length of the through hole of the air intake portion 151 (the total height of the air intake portion 151).

That is, in the experiment, the air purification member 170 with a size of 322 mm x 92 mm x 10 mm (w x h x t) was used. However, since the height of the through hole of the air intake portion 151 of the air-circulating electric roaster 100 used in the experiment is 18 mm, a size of 322 mm x 18 mm x 10 mm (w x h x t) can be set as the minimum size of the air purification member 170.

By using the air purification member 170 according to at least one embodiment of the present invention, it was possible to obtain an increase of the odor attenuation effect of about 60% to 80% compared to a conventional air-circulating electric roaster without the air purification member 170. In addition, it was possible to prevent oil adherence to the wall, which was a problem of the conventional air-circulating electric roaster, and an increase of the noise attenuation effect of the fan by about 30% to 40% was achieved due to the sound absorption effect of the sponge material.

In addition, by preventing oil adherence to the wall, the cleanliness of the fan was also improved, which had the advantage of making maintenance easier.

Based on the result of the above experiments, it can be seen that a sponge having a density of 15 kgs/m³ to 35 kgs/m³ can be used in the air purification member 170 according to at least one embodiment of the present invention, it is desirable to leave a predetermined distance (d) between the air intake portion 151 and the air purification member 170, the width (w) of the air purification member 170 can be set to the length of the air intake portion 151, and the height (h) of the air purification member 170 can be set to at least the length of the through hole of the air intake portion 151.

In at least one embodiment of the present invention, a sponge having a density of 15 kgs/m3 to 25 kgs/m3 can be used as the air purification member 170.

In the above embodiment, a form using a sponge material for the air purification member 170 has been described. However, as long as it is a porous material similar to a sponge, for example, non-woven fabric, sponge, and the like can also be used, and it is specified that any embodiment using such materials falls within the scope of the present invention.

In this manner, in at least one embodiment of the present invention, the air-circulating electric roaster 100 can configure an air-circulating electric roaster system that can effectively attenuate residual odors released to the outside during cooking, along with an air purification member 170 fixed by the fixing member 180.

As described above, according to at least one embodiment of the present invention, it is possible to provide an air-circulating electric roaster using a cross-flow fan, which can minimize contamination of air intake path and the cross-flow fan without interfering with smooth air circulation.

In addition, according to at least one embodiment of the present invention, it is possible to provide an air purification member that can effectively reduce oil and odor contained in the circulating air in an air-circulating electric roaster using a cross-flow fan.

Although exemplary embodiments of the present invention have been described for illustrative purposes, those skilled in the art will appreciate that various modifications, additions and substitutions are possible, without departing from the idea and scope of the claimed invention. Accordingly, one of ordinary skill would understand the scope of the claimed invention is not to be limited by the explicitly described above embodiments but by the claims and equivalents thereof.

### INDUSTRIAL APPLICABILITY

As the present invention provides an air purification member that can effectively reduce oil and odor contained in the circulating air in an air-circulating electric roaster using a cross-flow fan and an air-circulating electric roaster using a cross-flow fan, which can minimize contamination of air intake path and the cross-flow fan without interfering with smooth air circulation, it can be applied to areas of food and electric grill.

## Claims

1. An air-circulating electric roaster equipped with a cross-flow fan, comprising:
an air intake portion for sucking in air from above a cooking plate and an air discharge portion for discharging air to above the cooking plate respectively provided on a first side wall and a second side wall facing each other in a first direction, wherein the first side wall and the second side wall are combined with a body to respectively form parts of an air intake path and an air discharge path; and
a holder for detachably fixing an air purification member that makes contact with the air sucked through the air intake portion to an inner wall of the body where the air sucked through the air intake portion of the air intake path hits and changes its direction, wherein
the cross-flow fan is configured to suck air through the air intake path in a direction perpendicular to a rotation axis and to discharge the air in a direction perpendicular to the rotation axis.

2. The air-circulating electric roaster according to claim 1, wherein the first side wall and the second side wall are formed integrally and configured to be detachably coupled to the body.

3. The air-circulating electric roaster according to claim 1, wherein the air purification member fixed by the holder has a corrugated shape or a wrinkled shape to increase a surface area in contact with the air sucked through the air intake portion.

4. The air-circulating electric roaster according to claim 1, wherein the air purification member fixed by the holder includes a porous material.

5. An air-circulating electric roaster, comprising:
a body;
a heater for generating heat;
a fan disposed inside the body along a first direction of the body;
a cooking plate disposed on an upper part of the heater and heated by the heat from the heater;
an air intake portion having at least one or more through holes for sucking in air from above the cooking plate;
an air discharge portion having at least one or more through holes for discharging air that passed through inside the body towards above the cooking plate; and
a fixing member disposed between the air intake portion and an inner side of the body and is configured to fix an air purification member for attenuating odor of the air sucked through the air intake portion to an inner wall of the body so that a widest surface of the air purification member is parallel to an air flow path formed inside the body and faces the air flow path.

6. The air-circulating electric roaster according to claim 5, wherein the fixing member is provided so that the air flow path is formed between a surface of the air intake portion and a surface of the air purification member.

7. The air-circulating electric roaster according to claim 6, wherein the fixing member is provided so that the surface of the air purification member is disposed at a position between 1/5 and 2/3 of a distance between the surface of the air intake portion and a surface of the inner wall of the body from the surface of the air intake portion.

8. The air-circulating electric roaster according to claim 5, wherein a space is formed between a surface of the air intake portion and a surface of the inner wall of the body, where the air purification member having a length equal to or larger than a length of the air intake portion in a longitudinal direction is fixed by the fixing unit.

9. The air-circulating electric roaster according to claim 5, wherein a space is formed between a surface of the air intake portion and a surface of the inner wall of the body, where the air purification member having a length in a vertical direction of the air-circulating electric roaster equal to or larger than a length of the air intake portion in a short-side direction is fixed by the fixing member.

10. The air-circulating electric roaster according to claim 5, wherein
the air purification member is formed of a material with a porous structure, and has a plate shape with a predetermined width (w), height (h), and thickness (t),
the width (w) is equal to or larger than a length of the air intake portion in the first direction,
the height (h) is equal to or larger than a length in a vertical direction perpendicular to the first direction of the air intake portion,
the thickness (t) is within 4/5 of a width in a transversal direction perpendicular to the first direction of a space with the fan is disposed, and
the air purification member is disposed at a position separated by a distance (d) from the air intake portion.

11. The air-circulating electric roaster according to claim 10, wherein
the width (w) is equal to or larger than a length of the air intake portion in the first direction,
the height (h) is equal to or larger than a length in a vertical direction perpendicular to the first direction of the air intake portion, and
the thickness (t) is within 4/5 of a width in a transversal direction perpendicular to the first direction of a space with the fan is disposed.

12. An air-circulating electric roaster system, comprising:
the air-circulating electric roaster according to any one of claims 5 to 11; and
an air purification member fixed by the fixing member of the air-circulating electric roaster.
